Europäisches Patentamt

European Patent Office

Office européen des brevets

(11) Veröffentlichungsnummer: **0 265 534**
**B1**

## (12) EUROPÄISCHE PATENTSCHRIFT

(45) Veröffentlichungstag der Patentschrift:
08.03.89

(51) Int. Cl.⁴: **G06K 11/06**

(21) Anmeldenummer: **86114850.0**

(22) Anmeldetag: **25.10.86**

(54) **Vorrichtung zum Steuern der Bewegung eines Bildschirmzeigers.**

(43) Veröffentlichungstag der Anmeldung:
04.05.88 Patentblatt 88/18

(45) Bekanntmachung des Hinweises auf die Patenterteilung:
08.03.89 Patentblatt 89/10

(84) Benannte Vertragsstaaten:
CH DE FR GB IT LI NL SE

(56) Entgegenhaltungen:
EP-A- 0 085 960
GB-A- 2 145 200
US-A- 4 505 165
US-A- 4 562 347
US-A- 4 575 086
US-A- 4 581 609

(73) Patentinhaber: Hewlett-Packard GmbH, Herrenberger Strasse 130 Postfach 14 30, D-7030 Böblingen(DE)

(72) Erfinder: Schmidt, Michael, Jahnstrasse 59/2, D-7030 Böblingen(DE)

(74) Vertreter: Schulte, Knud, Dipl.-Ing., c/o Hewlett-Packard GmbH Europ. Patent- und Lizenzabteilung Postfach 1430 Herrenberger Strasse 130, D-7030 Böblingen(DE)

## Beschreibung

Die Erfindung betrifft eine Vorrichtung zum Steuern der Bewegung eines Bildschirmzeigers mit einer beweglich gelagerten Steuerkugel, deren Lagerung wenigstens zwei drehbewegliche Abrollkörper umfaßt, die an der Steuerkugel anliegen und deren Drehbewegung durch entsprechende Dekodiereinrichtungen in elektrische Signale umgewandelt wird.

Eine derartige Vorrichtung, die auch als "Trackball" bezeichnet wird, findet beispielsweise beim Einsatz von Computern Anwendung, um die Bewegung eines Zeigers (Cursors) auf dem Bildschirm zu steuern. In typischen Anwendungen wird der Zeiger auf ein vordefiniertes Feld auf dem Bildschirm gebracht und dann durch Drücken einer Taste eine bestimmte Funktion ausgewählt.

Eine Vorrichtung der eingangs genannten Art ist beispielsweise in der US-PS 4 575 086 beschrieben. Die Steuerkugel der dort gezeigten Vorrichtung ist auf drei Walzen gelagert, wobei zwei dieser Walzen rechtwinklig zueinander angeordnet sind und auf ihren Achsen Dekodierscheiben tragen. Diese Dekodierscheiben sind mit Öffnungen versehen und ragen in den Schlitz einer Lichtschranke, deren Licht je nach Stellung der Dekodierscheibe entweder durch eine der genannten Öffnungen fällt oder nicht. Mit einer derartigen Lichtschranke lassen sich somit die Bewegungen der Dekodierscheibe und damit der Steuerkugel erfassen und in elektrische Signale, beispielsweise Impulsfolgen, umwandeln. Die Steuerkugel ist nach allen Richtungen beweglich, wobei je eine der Dekodierscheiben die Bewegungen der Kugel in einer Koordinatenrichtung registriert. Dadurch lässt sich der Zeiger auf dem Bildschirm sowohl nach oben oder unten als auch nach rechts oder links bewegen.

Die gesamte Mimik (Steuerkugel, Walzen, Dekodiereinrichtungen und Elektronik) ist in ein Gehäuse eingebaut, dessen Oberseite eine kreisförmige Öffnung aufweist, durch die ein Teil der Steuerkugel ragt. In diesem Bereich kann die Steuerkugel durch die Finger des Bedieners bewegt werden.

Das in der US-PS 4 575 086 gezeigte Prinzip der Lagerung der Steuerkugel, bei dem zwei senkrecht zueinander stehende Walzen mit Dekodierscheiben die Bewegungen der Kugel erfassen und eine dritte Walze die Steuerkugel abstützt, wird in den meisten Vorrichtungen dieser Art verwandt (vgl. beispielsweise auch die US-PS 4 505 165). Diese Walzen haben jedoch folgenden Nachteil:

Wird die Steuerkugel nur in einer Koordinatenrichtung bewegt, d.h. senkrecht zur Achse der einen Walze und parallel zur Achse der anderen Walze, um den Bildschirmzeiger beispielsweise von links nach rechts zu fahren, und der Steuerkugel dabei mit den Fingern nur ein Anfangsimpuls erteilt, d.h. die Steuerkugel wird kurz angestossen und dann losgelassen, so läuft die Steuerkugel und damit auch der Bildschirmzeiger mit fortschreitender Bewegung aus der Richtung. Dies bedeutet im geschilderten Beispiel, daß sich der Bildschirmzeiger nicht exakt von links nach rechts über den gesamten Bildschirm bewegt, sondern mit fortschreitender Bewegung aus dieser Richtung nach oben oder unten driftet. Dasselbe gilt natürlich auch bei einer Bewegung des Bildschirmzeigers in vertikaler Richtung. Wird hier die Steuerkugel nur angestossen, so läuft sie und damit auch der Bildschirmzeiger nach rechts oder links aus der Richtung.

Der vorliegenden Erfindung liegt die Aufgabe zugrunde, eine Vorrichtung der eingangs genannten Art so auszubilden, daß beim Anstossen der Steuerkugel in nur einer Koordinatenrichtung diese ihre Bewegung, d.h. ihren Drehimpuls, beibehält und sich somit auch der Bewegungsvektor des Bildschirmzeigers nicht verändert.

Diese Aufgabe wird dadurch gelöst, daß zumindest einer der drehbeweglichen Abrollkörper einen in sich in Axialrichtung so verändernden Durchmesser aufweist, daß der Abrollkörper an wenigstens zwei Anlagepunkten mit der Steuerkugel in Kontakt steht. Hierdurch wird erreicht, daß bei einem einmaligen Anstossen der Steuerkugel in einer zur Achse eines Abrollkörpers lotrechten Richtung die Steuerkugel ihren Anfangsdrehimpuls beibehält. Der Bildschirmzeiger bewegt sich also in der Richtung seines Anfangsvektors weiter, ohne Abweichungen zu zeigen. Dies wird vorwiegend dadurch erreicht, daß durch die zwei Anlagepunkte an der Steuerkugel diese in der nicht gewünschten Bewegungsrichtung einen erhöhten Widerstand erfährt. Mit den bekannten Vorrichtungen dieser Art, bei denen die Abrollwalze die Steuerkugel nur jeweils an einem Punkt berührt, lässt sich dieser Vorteil nicht erreichen.

Zweckmässig ist es, wenn beide Abrollkörper nach dem kennzeichnenden Merkmal der Erfindung ausgestaltet sind, so daß der sich aus der Erfindung ergebende Vorteil – die Beibehaltung der Bewegungsrichtung des Bildschirmzeigers – in beiden in Frage kommenden Koordinatenrichtungen zur Verfügung steht. Es versteht sich, daß die mit den Dekodiereinrichtungen verbundenen Abrollkörper nicht zwangsläufig senkrecht zueinander angeordnet sein müssen, doch ist dies vorteilhaft, da dann einer Achse eine Koordinate am Bildschirm direkt zugeordnet werden kann, ohne eine vektorielle Umrechnung vorzunehmen und außerdem in der Regel der Bildschirmzeiger entweder vertikal oder horizontal bewegt werden soll. Die weitere Lagerung der Steuerkugel kann in an sich bekannter Weise erfolgen, d.h. beispielsweise mit einer dritten Rolle oder auch mit zwei zusätzlichen Rollen, in bekannter Art und Weise ausgeführt oder auch gemäß den Merkmalen der vorliegenden Erfindung ausgestaltet sein können.

In bevorzugter Ausführungsform der Erfindung ist der Durchmesser wenigstens eines, vorzugsweise jedoch beider, drehbeweglicher Abrollkörper an zumindest zwei ausgezeichneten Orten grösser als an einem Ort minimalen Abstands, wobei der Ort minimalen Abstands der Punkt auf der Achse des drehbeweglichen Abrollkörpers ist, der den geringsten Abstand zur Oberfläche der Steuerkugel aufweist und die ausgezeichneten Orte auf der Achse des drehbeweglichen Abrollkörpers liegen, und zwar auf – in Axialrichtung – unterschiedlichen Seiten des Orts minimalen Abstands. Dies bedeutet, daß die Steuerkugel von dem Abrollkörper quasi von zwei Seiten, die beidseitig des Lots vom Mittelpunkt der Steuerkugel auf die Achse des Abrollkörpers liegen, gestützt wird. Damit wird es möglich, den drehbeweglichen Abrollkörper ohne Anschlag in Axialrichtung zu lagern, da sich der Abrollkörper beim Aufsetzen der Steuerkugel von selbst zentriert. Im Vergleich zu den herkömmlichen Lagerungen mit axialem Anschlag – siehe beispielsweise die in der US-PS 4 575 086 gezeigte Spitzenlagerung – ist damit eine wesentlich einfachere Lagerung möglich, indem beispielsweise eine mit dem Abrollkörper verbundene Welle in eine Nut einer Stützvorrichtung eingelegt wird. In zweckmässigen Ausführungsformen hat der Abrollkörper die geometrische Form eines Doppelkegels, bei dem die Stirnflächen geringeren Durchmessers aneinanderstossen, oder die geometrische Form zweier auf eine Welle aufgesetzter scheibenartiger Körper oder Kugeln. (Die Erwähnung dieser geometrischen Grundformen, aus denen sich der Abrollkörper zusammensetzt, bedeutet natürlich nicht, daß der Abrollkörper nicht einteilig ausgeführt werden könnte.) Ebenso ist es zweckmässig, wenn sich der drehbewegliche Abrollkörper in einer durch seine Achse und durch den Mittelpunkt der Steuerkugel gelegten Ebene an die Steuerkugel anschmiegt.

Weitere Merkmale und Vorteile ergeben sich aus den Unteransprüchen. Die Beschreibung zur Zeichnung stellt bevorzugte Ausführungsformen der Erfindung dar. Es zeigen:

Figur 1 den Bildschirmzeiger eines bekannten Trackballs, wenn die Steuerkugel von links nach rechts angestossen und dann losgelassen wird,

Figur 2 das Verhalten des Bildschirmzeigers bei Verwendung eines erfindungsgemässen Trackballs,

Figur 3 die schematische Darstellung einer ersten Ausführungsform der Erfindung,

Figur 4 eine zweite Ausführungsform der Erfindung,

Figur 5 eine dritte Ausführungsform,

Figur 6 eine vierte Ausführungsform,

Figur 7 die Draufsicht auf ein oben geöffnetes Gehäuse einer erfindungsgemässen Steuervorrichtung,

Figur 8 einen Schnitt in Richtung der Bezugslinie VIII–VIII der Figur 7,

Figur 9 ein Beispiel der Lagerung der Welle eines Abrollkörpers und

Figur 10 das Detail X aus Figur 9.

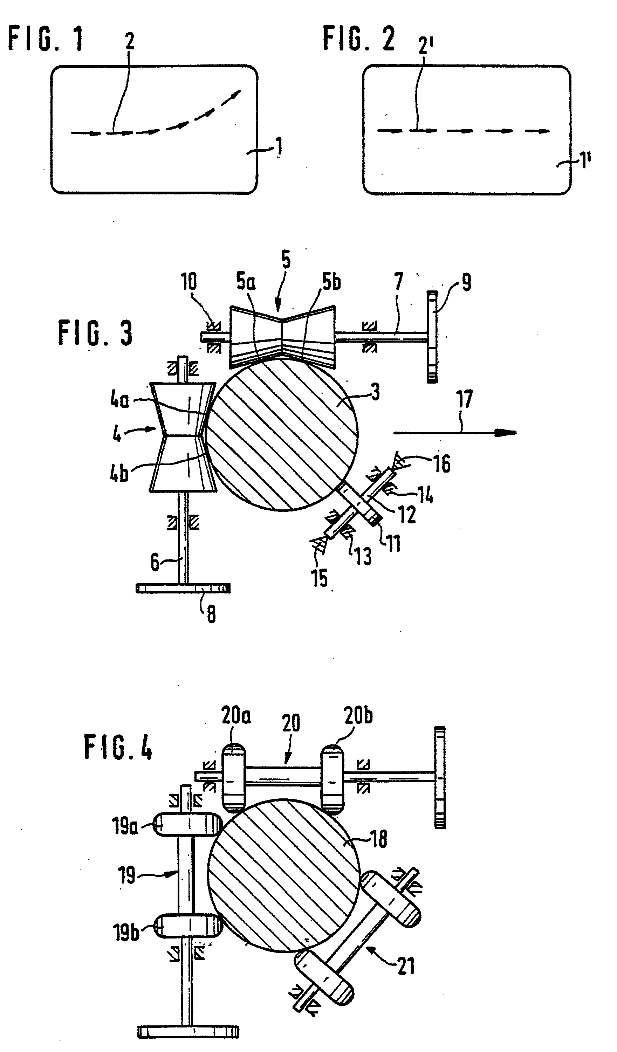

Figur 1 zeigt einen Bildschirm 1, auf dem die Bewegung 2 eines Bildschirmzeigers dargestellt ist. Hierbei wurde ein bekannter Trackball verwendet und die Steuerkugel von links nach rechts angestossen und dann losgelassen. Es ist erkennbar, daß der anfänglich exakt nach rechts verlaufende Bewegungsvektor des Bildschirmzeigers mit fortschreitender Bewegung zusätzlich eine horizontale – in diesem Fall nach oben weisende – Bewegungskomponente erhält. Verursacht wird diese Erscheinung durch das instabile dynamische Gleichgewicht der Lagerung, da bei den bekannten Vorrichtungen die Steuerkugel auf zylindrischen Walzen gelagert ist, d.h. nur jeweils einen Berührungspunkt gegenüber jeder Walze aufweist. Die Bewegung des Bildschirmzeigers endet daher nicht – wie beabsichtigt – in der Mitte des rechten Bildrandes gemäß Figur 1, sondern oberhalb dieses Punktes.

Derselbe Vorgang führt bei Verwendung eines erfindungsgemäßen Trackballs zu einer rein linearen Bewegung des Bildschirmzeigers, wie dies durch die Bewegung 2' auf dem Bildschirm 1' der Figur 2 dargestellt ist.

Die Figur 3 zeigt ein erstes Ausführungsbeispiel der Erfindung in schematischer Darstellung. Eine Steuerkugel 3 ist geschnitten gezeichnet, um ihr Anliegen an den drehbeweglichen Abrollkörpern besser darstellen zu können. Die Schnittebene geht hierbei nicht durch den Mittelpunkt der Steuerkugel.

Die Steuerkugel 3 liegt auf zwei drehbeweglichen Abrollkörpern 4 und 5 auf, deren Achsen lotrecht zueinander angeordnet sind. Jeder dieser Abrollkörper besitzt die geometrische Form eines Doppelkegels. Hierdurch ergeben sich für jeden Abrollkörper zwei Anlagepunkte an der Steuerkugel 3, welche mit 4a und 4b bzw. 5a und 5b bezeichnet sind. Jeder der Abrollkörper 4 und 5 sitzt auf einer entsprechenden Welle 6 bzw. 7. Diese Wellen tragen die Kodierscheiben 8 bzw. 9, welche mit Öffnungen versehen sind und von Lichtschranken abgetastet werden. Mit jeder dieser – in der Figur 3 nicht gezeigten – Lichtschranken lässt sich eine Drehbewegung des zugeordneten Abrollkörpers feststellen und in ein entsprechendes elektrisches Signal, beispielsweise eine Impulsfolge, zur Steuerung des Bildschirmzeigers umwandeln. Es ist auch möglich und bereits bekannt, jeder der Dekodierscheiben 8 und 9 jeweils zwei um 90° phasenversetzte Lichtschranken zuzuordnen, so daß sich nicht nur die Drehgeschwindigkeit, sondern auch die Drehrichtung des Abrollkörpers feststellen lässt.

Die Abrollkörper 4 und 5 können einteilig hergestellt, z.B. aus Stahl gedreht sein. In einer zweckmässigen Ausführungsform bestehen allerdings lediglich die Wellen 6 und 7 auf Stahl, während die mit der Steuerkugel 3 in Kontakt kommenden Kegelflächen aus Kunststoff gefertigt sind. Hierdurch wird das Rollgeräusch der Steuerkugel 3 gedämpft.

Die Wellen 6 und 7 sind – wie nur schematisch, beispielsweise durch das Lager 10 – angedeutet, gelagert. Es sind jedoch keine axialen Anschläge vorgesehen; vielmehr sind die Wellen 6 und 7 (die mit den Abrollkörpern 4 und 5 fest verbunden sind) in axialer Richtung frei beweglich. Alternativ hierzu ist es auch möglich, zwar Anschläge vorzusehen, den Wellen hierbei aber ein gewisses Spiel zu belassen. Wird die Steuerkugel 3 auf die Abrollkörper 4 und 5 aufgesetzt, so rutschen diese aufgrund ihres Axialspiels automatisch in die gezeigte Position, in der sie mit zwei Anlagepunkten an der Steuerkugel 3 anliegen, spätestens beim ersten Bewegen dieser Steuerkugel. Hierdurch werden teuere Axiallagerungen, beispielsweise Spitzenlagerungen, vermieden. Außerdem verringert sich die durch die Lagerung verursachte Reibung.

Die Steuerkugel 3 ist an weiteren Punkten gelagert, im gezeigten Beispiel an einer Scheibe 11. Die Art dieser Lagerung ist für die vorliegende Erfindung nicht entscheidend; im gezeigten Beispiel sitzt die Scheibe 11 auf einer Welle 12, welche in Umfangsrichtung (Lager 13, 14) sowie in Axialrichtung (Lager 15, 16) gelagert ist. Es ist jedoch auch ohne weiteres möglich, anstelle der Lagerscheibe 11 einen Abrollkörper der mit den Bezugszeichen 4 und 5 versehenen Art zu verwenden.

Wird der Steuerkugel 3 ein Impuls in Richtung des Pfeils 17 erteilt und die Steuerkugel anschließend losgelassen, so behält sie ihren Anfangsdrehimpuls aufgrund des hohen Widerstands an den Anlagepunkten 5a und 5b bei, d.h. nur der Abrollkörper 4 rotiert. Damit ist auch gewährleistet, daß sich der Bildschirmzeiger nur wie in der Figur 2 gezeigt bewegt. Gleiches gilt natürlich auch für eine Bewegung von rechts nach links oder für eine Bewegung in vertikaler Richtung.

Eine weitere Ausführungsform der Erfindung ist in der Figur 4 dargestellt. Die dort gezeigte Steuerkugel 18 liegt an zwei Abrollkörpern 19 und 20 an, und zwar an scheibenartigen Körpern 19a und 19b bzw. 20a und 20b derselben. Im übrigen entspricht die Ausführungsform nach Figur 4 konstruktionstechnisch und in ihrem Verhalten nach der Ausführungsform nach Figur 3. Der dritte Lagerpunkt wird in diesem Fall durch einen weiteren Abrollkörper 21 gebildet, der den Abrollkörpern 19 und 20 entspricht. Im Gegensatz zu der Scheibe 11 nach Figur 3 entfällt hier eine axiale Lagerung.

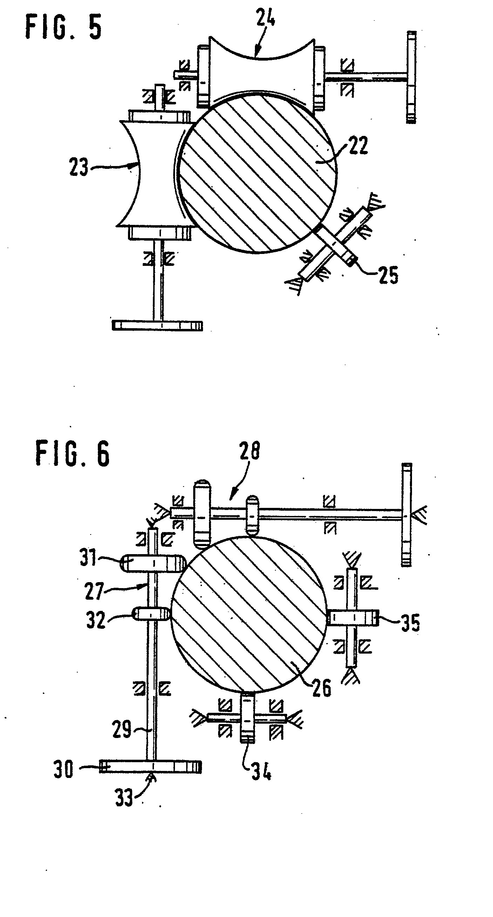

Figur 5 zeigt ein weiteres Ausführungsbeispiel mit den dort an der Steuerkugel 22 anliegenden Abrollkörpern 23 und 24, deren geometrische Form u.a. durch Rotation eines Kreisbogenabschnitts entsteht. Dieser Kreisbogenabschnitt ist so gewählt, daß er sich in der Berührungsebene mit der Steuerkugel 22 an diese anschmiegt. Man erhält somit eine linienförmige Berührung zwischen den Abrollkörpern und der Steuerkugel 22, was im Prinzip unendlich vielen Anlagepunkten an derselben entspricht. Die Gegenlagerung wird in diesem Fall wieder durch eine axial gelagerte Scheibe 25 bewirkt.

Figur 6 zeigt ein Ausführungsbeispiel, bei dem jeweils (d.h. bei jedem Abrollkörper) nur ein Anlagepunkt grösseren Abstand von der Achse des Abrollkörpers hat als der Anlagepunkt, der dem Mittelpunkt der Steuerkugel 26 gegenüberliegt. Beispielsweise besteht der Abrollkörper 27 aus einer Welle 29, die eine Dekodierscheibe 30 trägt und ferner zwei Scheiben 31 und 32. Die Scheibe 32 befindet sich an dem Ort der Welle 29, die den geringsten Abstand zur Steuerkugel 22 aufweist. Sie liegt ebenso wie die Scheibe 31 an der Steuerkugel an. Der Abrollkörper 28 ist im Prinzip ebenso aufgebaut. Auch mit einer derartigen Ausführung lässt sich erreichen, daß die Steuerkugel einen ihr erteilten Anfangsdrehimpuls exakt beibehält. Allerdings ist in diesem Fall, wie beispielsweise durch das Bezugszeichen 33 angedeutet, eine Axiallagerung erforderlich. Auch die weiteren Scheiben 34 und 35 sind axial gelagert.

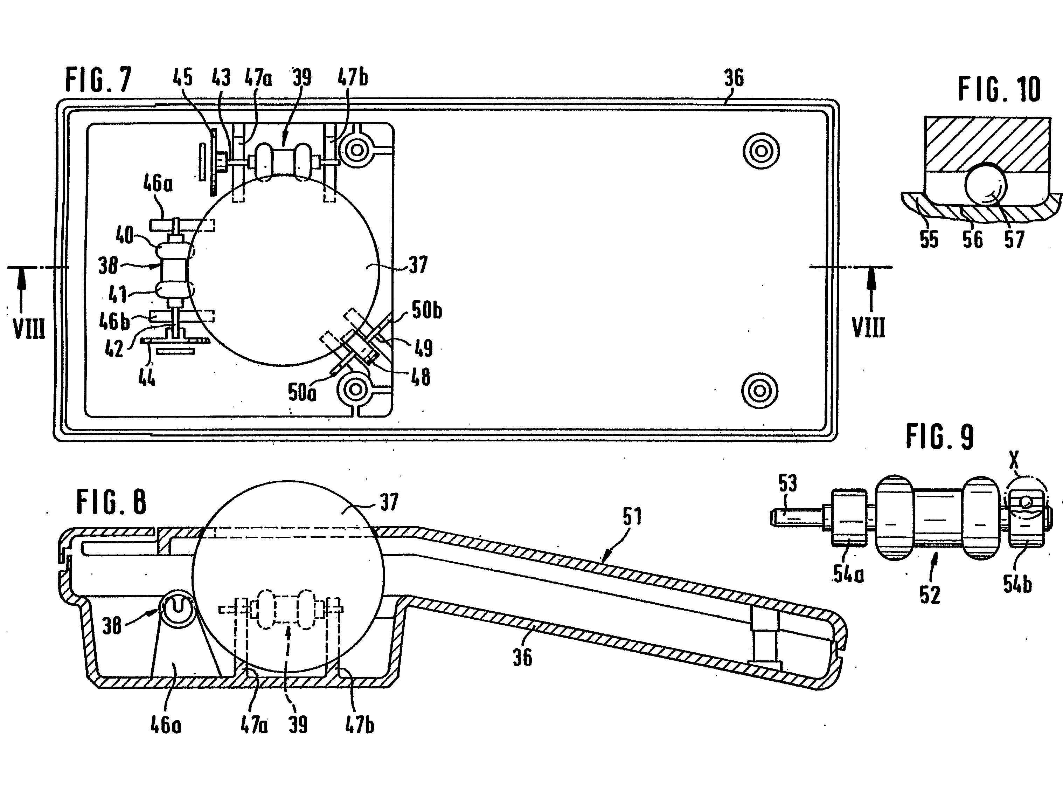

Die Figuren 7 und 8 schließlich zeigen einen in ein Gehäuse eingebauten Trackball, wobei die für die vorliegende Erfindung nicht wesentlichen Bauteile wie beispielsweise die zugeordnete Elektronik oder die Lichtschranken weggelassen wurden. Die Figur 7 zeigt das Gehäuse in Draufsicht mit abgenommenem Deckel und die Figur 8 einen Schnitt in Richtung der Bezugslinie VIII–VIII der Figur 7, jedoch mit aufgesetztem Deckel.

In Figur 7 ist das Gehäuse des Trackballs im Ganzen mit 36 bezeichnet. Die Steuerkugel 37 ist – im Gegensatz zu der Darstellung gemäß den Figuren 3 bis 6 – nicht geschnitten gezeichnet und verdeckt daher teilweise die Abrollkörper, auf denen sie gelagert ist.

Die Abrollkörper sind mit den Bezugszeichen 38 und 39 versehen und liegen jeweils mit zwei wulst- oder scheibenförmigen Verdickungen an der Steuerkugel 37 an. Diese Wulste sind – am Beispiel des Abrollkörpers 38 – mit 40 und 41 bezeichnet. Die Abrollkörper können aus gehärtetem und geschliffenem Stahl hergestellt sein; in einer anderen Ausführung bestehen sie aus Kunststoff, welcher das Rollgeräusch der Steuerkugel im Betrieb dämpft. Jeder der Abrollkörper sitzt auf einer (mit 42 bzw. 43 bezeichneten) Welle; der Abrollkörper selbst kann beispielsweise im Preßsitz auf dieser Welle aufgepresst werden oder auch, wenn der Abrollkörper selbst aus Metall besteht, einteilig mit dieser gedreht sein. An ihren Enden tragen die Wellen 42 bzw. 43 jeweils Dekodierscheiben 44 bzw. 45, die mit Öffnungen versehen sind, welche von – hier nicht gezeigten – Lichtschranken abgetastet werden. Die Wellen 42 und 43 sind axial frei beweglich gelagert. Sie sitzen hierzu in senkrechten Nuten von Tragprofilen 46a und 46b bzw. 47a und 47b. Die Art dieser Lagerung wird besonders aus der Figur 8 deutlich.

Dritter Lagerpunkt der Steuerkugel 37 ist eine Scheibe 48. Die Welle 49, auf der diese Scheibe sitzt, ist, wie durch die Bezugszeichen 50a und 50b angedeutet, axial gelagert. Stattdessen wäre es jedoch auch ohne weiteres möglich, hier einen Abrollkörper der mit den Bezugszeichen 38 und 39 bezeichneten Art anzubringen, wodurch eine Axiallagerung ebenfalls entfiele.

Die Figur 8 zeigt deutlich, wie die Steuerkugel 37 und ihre Lagerung in das Gehäuse eingepasst ist. Zur Bedienung des Trackballs wird der Handballen auf die geneigte Oberfläche 51 des Gehäusedeckels aufgelegt und die Steuerkugel 37 mit den Fingern betätigt.

In Figur 9 ist eine weitere Möglichkeit einer axial frei beweglichen Lagerung der Welle eines Abrollkörpers gezeigt. Die mit dem Abrollkörper 52 verbundene Welle 53 ist dort in Kugellagern 54a, 54b mit Axialspiel gelagert. Die konstruktiven Einzelheiten eines derartigen Lagers ergeben sich aus der Fig. 10, die die Einzelheit X der Figur 9 vergrößert zeigt. Der mit der Welle in Kontakt (Kraft- oder Formschluß) stehende Ring 55 weist eine umlaufende ringförmige Vertiefung 56 auf, die so breit ist, daß die Kugel 57 in axialer Richtung in ihr wandern kann.

Diese Lösung ist mechanisch etwas aufwendiger als die Lagerung der Welle in Nuten, gewährleistet jedoch eine noch geringere Rollreibung.

## Patentansprüche

1. Vorrichtung zum Steuern der Bewegung eines Bildschirmzeigers mit einer beweglich gelagerten Steuerkugel, deren Lagerung wenigstens zwei drehbewegliche Abrollkörper umfasst, die an der Steuerkugel anliegen und deren Drehbewegung durch entsprechende Dekodiereinrichtungen in elektrische Signale umgewandelt wird, dadurch gekennzeichnet, daß zumindest einer dieser drehbeweglichen Abrollkörper (4, 5; 19, 20; 23, 24; 27, 28; 38, 39) einen sich in Axialrichtung so verändernden Durchmesser aufweist, daß der Abrollkörper (4, 5; 19, 20; 23, 24; 27, 28; 38, 39) an wenigstens zwei Anlagepunkten (4a, 4b, 5a, 5b) mit der Steuerkugel (3; 18; 22; 26; 37) in Kontakt steht.

2. Vorrichtung nach Anspruch 1, dadurch gekennzeichnet, daß der Durchmesser des drehbeweglichen Abrollkörpers (4, 5; 19, 20; 23, 24; 27, 28; 38, 39) an zumindest einem ausgezeichneten Ort grösser ist als an einem Ort minimalen Abstands, wobei der Ort minimalen Abstands der Punkt auf der Achse des drehbeweglichen Abrollkörpers (4, 5; 19, 20; 23, 24; 27, 28; 38, 39) ist, der den geringsten Abstand zur Oberfläche der Steuerkugel (3; 18; 22; 26; 37) aufweist und der ausgezeichnete Ort ein anderer Ort auf dieser Achse.

3. Vorrichtung nach Anspruch 2, dadurch gekennzeichnet, daß der Durchmesser des drehbeweglichen Abrollkörpers (4, 5; 19, 20; 23, 24; 38, 39) an zumindest zwei ausgezeichneten Orten grösser ist als an dem Ort minimalen Abstands, wobei die ausgezeichneten Orte auf der Achse des drehbeweglichen Abrollkörpers (4, 5; 19, 20; 23, 24; 38, 39), und zwar auf – in Axialrichtung – unterschiedlichen Seiten des Orts minimalen Abstands liegen.

4. Vorrichtung nach Anspruch 3, dadurch gekennzeichnet, daß der drehbewegliche Abrollkörper (4, 5) die geometrische Form eines Doppelkegels, bei dem die Stirnflächen geringeren Durchmessers aneinanderstossen, hat.

5. Vorrichtung nach Anspruch 3, dadurch gekennzeichnet, daß der drehbewegliche Abrollkörper (19, 20; 38, 39) die geometrische Form zweier auf eine Welle aufgesetzter scheibenartiger Körper (19a, 19b, 20a, 20b; 40, 41) hat.

6. Vorrichtung nach Anspruch 3, dadurch gekennzeichnet, daß der drehbewegliche Abrollkörper die geometrische Form zweier auf eine Welle aufgesetzter Kugeln hat.

7. Vorrichtung nach Anspruch 3, dadurch gekennzeichnet, daß sich der drehbewegliche Abrollkörper (23, 24) in einer durch seine Achse und durch den Mittelpunkt der Steuerkugel (22) gelegten Ebene an die Steuerkugel (22) anschmiegt.

8. Vorrichtung nach wenigstens einem der Ansprüche 3 bis 7, dadurch gekennzeichnet, daß der drehbewegliche Abrollkörper (4, 5; 19, 20; 23, 24; 38, 39; 52) mit einer Welle (6, 7; 42, 43; 53) verbunden ist, die beidseitig ohne Anschlag in Axialrichtung gelagert ist.

9. Vorrichtung nach Anspruch 8, dadurch gekennzeichnet, daß die Welle (53) beidseitig in Kugellagern (54a, 54b) mit Axialspiel gelagert ist.

10. Vorrichtung nach wenigstens einem der vorhergehenden Ansprüche, dadurch gekennzeichnet, daß zumindest die Teile des drehbeweglichen Abrollkörpers (4, 5; 19, 20; 23, 24; 27, 28; 38, 39), die Kontakt mit der Steuerkugel (3; 18; 22; 26; 37) haben, aus Kunststoff gefertigt sind.

## Claims

1. Device for controlling the motion of a videoscreen cursor with a movably held control ball, the bearing arrangement of said control ball comprising at least two rotatable rolling bodies, said rolling bodies being in contact with said control ball and the rotary motion of said rolling bodies being converted into electrical signals by appropriate decoding means, characterized in that at least one of said rotatable rolling bodies (4, 5; 19, 20; 23, 24; 27, 28; 38, 39) has such a change of diameter n the axial direction that the rolling body (4, 5; 19, 20; 23, 24; 27, 28; 38, 39) is in contact with the control ball (3; 18; 22; 26; 37) at at least two contact points (4a, 4b, 5a, 5b).

2. Device according to claim 1, characterized in that the diameter of the rotatable rolling body (4, 5; 19, 20; 23, 24; 27, 28; 38, 39) at at least one singular location is greater than at a location of minimum clearance, the location of minimum clearance being that point on the axis of the rotatable rolling body (4, 5; 19, 20; 23, 24; 27, 28; 38, 39) having the smallest clearance with respect to the surface of said control ball (3; 18; 22; 26; 37), and the singular location being another location on said axis.

3. Device according to claim 2, characterized in that the diameter of the rotatable rolling body (4, 5; 19, 20; 23, 24; 38, 39) at at least two singular locations is greater than at the location of minimum clearance, the singular locations being situated on the axis of the rotatable rolling body (4, 5; 19, 20; 23, 24; 38, 39) and on – as viewed in the axial direction – different sides of the location of minimum clearance.

4. Device according to claim 3, characterized in that said rotatable rolling body (4, 5) has the geometrical shape of a double cone in which the end faces of smaller diameter abut.

5. Device according to claim 3, characterized in that the rotatable rolling body (19, 20; 38, 39) has the geometrical shape of two disk-like bodies (19a, 19b, 20a, 20b; 40, 41) mounted on a shaft.

6. Device according to claim 3, characterized in that the rotatable rolling body has the geometrical shape of two spheres mounted on a shaft.

7. Device according to claim 3, characterized in that the rotatable rolling body (23, 24) hugs the control ball (22) in a plane passed through the axis of the rolling body (23, 24) and through the center of the control ball (22).

8. Device according to at least one of claims 3 to 7, characterized in that the rotatable rolling body (4, 5; 19, 20; 23, 24; 38, 39; 52) is connected to a shaft (6, 7; 42, 43; 53), said shaft (6, 7; 42, 43; 53) being held in the axial direction without a stop at either end.

9. Device according to claim 8, characterized in that the shaft (53) is held in ball bearings (54a, 54b) with axial play at both ends.

10. Device according to at least one of the preceding claims, characterized in that at least those parts of the rotatable rolling body (4, 5; 19, 20; 23, 24; 27, 28; 38, 39) which are in contact with the control ball (3; 18; 22; 26; 37) are made of plastic.

**Revendications**

1. Dispositif pour commander le mouvement d'un curseur sur un écran vidéo, comprenant une sphère de commande supportée de façon mobile, dont le support comporte au moins deux corps de roulement mobiles en rotation, qui s'appliquent contre la sphère de commande et dont le mouvement de rotation est converti en signaux électriques par des dispositifs de décodage correspondants, caractérisé en ce qu'au moins un de ces corps de roulement mobiles en rotation (4, 5; 19, 20; 23, 24; 27, 28; 38, 39) a un diamètre variant dans une direction axiale de telle sorte que le corps de roulement (4, 5; 19, 20; 23, 24; 27, 28; 38, 39) soit en contact avec la sphère de commande (3; 18; 22; 26; 37) en au moins deux points d'appui (4a, 4b, 5a, 5b).

2. Dispositif selon la revendication 1, caractérisé en ce que le diamètre du corps de roulement mobile en rotation (4, 5; 19, 20; 23, 24; 27, 28; 38, 39) en au moins une position définie est plus grand qu'en une position d'espacement minimal, la position d'espacement minimal étant le point situé sur l'axe du corps de roulement mobile en rotation (4, 5; 19, 20; 23, 24; 27, 28; 38, 39) qui présente l'espacement minimal par rapport à la surface de la sphère de commande (3; 18; 22; 26; 37;) tandis que la position définie est une autre position sur cet axe.

3. Dispositif selon la revendication 2, caractérisé en ce que le diamètre du corps de roulement mobile en rotation (4, 5; 19, 20; 23, 24; 38, 39) en au moins deux positions définies est plus grand que dans la position d'espacement minimal, les positions définies étant situées sur l'axe du corps de roulement mobile en rotation (4, 5; 19, 20; 23, 24; 38, 39), et notamment sur des côtés différents – dans une direction axiale – de la position d'espacement minimal.

4. Dispositif selon la revendication 3, caractérisé en ce que le corps de roulement mobile en rotation (4, 5) a la forme géométrique d'un double cône, les surfaces frontales de petit diamètre étant appliquées l'une contre l'autre.

5. Dispositif selon la revendication 3, caractérisé en ce que le corps de roulement mobile en rotation (19, 20; 38, 39) a la forme géométrique de deux corps en forme de disques (19a, 19b; 20a, 20b; 40, 41) montés sur un arbre.

6. Dispositif selon la revendication 3, caractérisé en ce que le corps de roulement mobile en rotation a la forme géométrique de deux sphères montées sur un arbre.

7. Dispositif selon la revendication 3, caractérisé en ce que le corps de roulement mobile en rotation (23, 24) rejoint la sphère de commande (22) dans un plan passant par l'axe du corps et par le centre de la sphère de commande (22).

8. Dispositif selon au moins une des revendications 3 à 7, caractérisé en ce que le corps de roulement mobile en rotation (4, 5; 19, 20; 23, 24; 38, 39; 52) est relié à un arbre (6, 7; 42, 43; 53) qui est supporté de chaque côté sans butée en direction axiale.

9. Dispositif selon la revendication 8, caractérisé en ce que l'arbre (53) est monté des deux côtés dans des roulements à billes (54a, 54b), avec un jeu axial.

10. Dispositif selon au moins une des revendications précédentes, caractérisé en ce qu'au moins les parties du corps de roulement mobile en rotation (4, 5; 19, 20; 23, 24; 27, 28; 38, 39) qui sont en contact avec la sphère de commande (3; 18; 22; 26; 37) sont réalisées en matière plastique.

FIG. 1

FIG. 2

FIG. 3

FIG. 4

FIG. 5

FIG. 6

FIG. 7

45 43 47a 39 47b                36

46a

40
38                37
41
46b                50b
42                49
44                48
50a

VIII        VIII

FIG. 10

55 56 57

FIG. 8

37        51

38        36

46a 47a 39 47b

EP 0 265 534 B1

FIG. 9

X

53

54a        54b
52